# EUROPEAN PATENT SPECIFICATION

(11) **EP 2 248 060 B1**
(45) Date of publication and mention of the grant of the patent: **10.04.2019**
(21) Application number: 09715409.0
(22) Date of filing: 10.02.2009
(51) Int. Cl.: G06F 21/10, H04L 29/06

(54) **SOFTWARE LICENSE MANAGEMENT SYSTEM THAT FUNCTIONS IN A DISCONNECTED OR INTERMITTENTLY CONNECTED MODE**
SOFTWARELIZENZVERWALTUNGSSYSTEM MIT BETRIEB IN GETRENNTEM ODER ZEITWEISE VERBUNDENEM MODUS
SYSTÈME DE GESTION DE LICENCES DE LOGICIEL QUI FONCTIONNE EN MODE DÉCONNECTÉ OU EN MODE CONNECTÉ PAR INTERMITTENCE

(30) Priority: 28.02.2008 US 39572
(43) Date of publication of application: 10.11.2010
(73) Proprietor: Honeywell International Inc., Morris Plains, NJ 07950 (US)
(72) Inventor: PAVAN, David, John, Calgary Alberta T2N 2N7 (CA); ELLIOTT, Christopher, Daniel, Calgary Alberta T2Y 4M9 (CA); NORRIS, Samuel, Grosvenor, Victoria British Columbia V8S 4X1 (CA)
(74) Representative: Houghton, Mark Phillip
(86) International application number: PCT/US2009/033622
(87) International publication number: WO 2009/108485

(56) References cited:
- JP-A- 2007 249 804
- US-A1- 2004 010 469
- US-A1- 2004 199 760
- US-A1- 2005 289 072
- US-A1- 2007 157 308

## Description

### TECHNICAL FIELD

This disclosure relates generally to software license management systems and more specifically to a software license management system that functions in a disconnected or intermittently connected mode.

### BACKGROUND

Software license management is an essential service for any commercial software product to ensure the legitimate usage of the software product and to ensure the proper distribution of the software product. Software license providers ("license providers") are typically located within software that is located on a computer server. Software license consumers ("license consumers") are typically software applications that are located on a computer workstation or computer server. Existing software license management systems are based upon the ability of the software provider to communicate securely with the software license consumers.

A license provider has a finite number of software licenses ("licenses") stored within the computer server on which the license provider is located. The license provider typically has an encrypted license file that contains the names of the licenses and the names of the customers (i.e., license consumers) that are authorized to receive the licenses.

When a license consumer desires to obtain particular software licenses, the license consumer may attempt to acquire the licenses from one or more license providers. The license consumer sends a license request to one or more license providers. A license provider that can satisfy the license consumer's request (1) licenses the requested license (or licenses) to the license consumer, (2) marks the requested license (or licenses) as being in use by the license consumer, and (3) establishes and maintains a secure communication link with the license consumer.

The license provider maintains the secure communication link with the license consumer until the license consumer releases the license (or licenses) or the link with the license consumer fails due to a hardware or software fault, thereby implicitly releasing the license (or licenses). A license that is marked as being in use is not available to other license consumers until the license has been released. Licenses that are released re-enter the available license pool of the license provider.

The encrypted license file in the software license management system may be stored on a disk drive or other memory device such as a Univeral Serial Bus (USB) key or smartcard. As previously mentioned, the encrypted license file contains the names of the authorized license consumers and the names of the licenses that they are authorized to receive. The software license management system is capable of reading the authorization information in the encrypted license file and serving the requested licenses to the license consumers that have the proper authorization.

The software license management system typically resides at a location that is remote from the location of the software applications that it licenses. This provides a more convenient centralized administration of the license process. In existing software license management systems, the license provider (located on a license server) is located at a remote location with respect to the license consumer (located on a client server).

Dedicated license servers are not efficient in mobile computing scenarios. For example, dedicated license servers are not efficient at supporting software product demonstrations or training operations at remote non-fixed locations. Prior art approaches to providing software licenses in mobile computing scenarios include providing (for an additional fee) (1) short-term or dedicated entitlement to support mobile use, (2) portable entitlement in the form of hardware keys, (3) temporary offline stand-alone licenses, and (4) node-locked licenses that are not network-based.

The success of Internet protocols and techniques and their application to new classes of software products poses a problem for existing software licensing management systems. This is because systems that are based on Internet protocols and techniques require frequent and ongoing communication between a license provider and a license consumer. Without a continuous assertion of need from a license consumer (1) it is impossible to ensure than the license consumer's entitlement to a software license is genuine and (2) it is impossible to warrant that the license provider's software license pool accurately reflects license availability.

Software products that are based on Internet protocols and techniques do not and cannot maintain a continuous connection between a license provider and a license consumer. Web service architecture is a good example of this feature. Web services act as autonomous agents from which a software application is composed and connected through individual messages. Individual web services may need to be licensed. However, it is neither practical nor efficient to request a license from a license provider every time a web service is required. On the other hand, it is not fair or appropriate for a web service to hold a license any longer than is necessary. To allow a web service to hold a license longer than is necessary would very likely restrict another legitimate use that license.

It would be desirable to have a more efficient method for providing software license entitlement in a software license management system that functions in a disconnected or intermittently connected mode. It would be desirable to have a software license management system that has the ability to solve the problems that arise due to the intermittent communication between a license provider and a license consumer in software systems that are based on Internet protocols and techniques.

U.S. Patent Publication No. 2013/0075128 discloses a telecommunication system including a computational component operating in a first licensing mode. The system includes a license manager that identifies the occurrence of a predetermined licensing event and a mode setting agent that notifies a user of the predetermined licensing event and determines whether or not the user acknowledges receipt of the notice within a selected time period. When the user fails to acknowledge receipt of the notice within the selected time period, the mode setting agent causes the computational component to operate in a second licensing mode, and, when the user acknowledges receipt of the notice within the selected time period, causes the computational component to operate in a third licensing mode. The first, second, and third licensing modes provide for first, second, and third sets of operations, respectively. Each of the first and third sets of operations differs from the second set of operations.

### SUMMARY

The present invention provides for an apparatus for managing software licenses and a corresponding method as claimed in the accompanying claims.

The present invention comprises a software license management system that comprises (1) a license borrowing mechanism that is capable of temporarily licensing the operation of software for a license consumer that subsequently goes offline with respect to the license provider, and (2) a mechanism for testing a communication link between the license consumer (the client server) and the license provider (the license server), and (3) an executive logic layer software module that is located on the license consumer (the client server).

The executive logic layer software module comprises a set of fault tolerance rules, and a set of service licensing rules, a history of network interruptions that have recently occurred, and a user interface module. When a network interrupt occurs, the executive logic layer consults the fault tolerance rules to determine whether to automatically initiate short term license borrowing using a fault tolerance mode of operation. If the fault tolerance mode of operation is used, the short term license borrowing continues as long as needed. Then the normal online mode of license borrowing is resumed.

If the fault tolerance mode of operation is not appropriate based on the application of the fault tolerance rules, the executive logic layer then consults the service licensing rules to determine whether to automatically initiate short term license borrowing using a service licensing mode of operation. If the service licensing mode of operation is used, the short term license borrowing continues as long as needed. Then the normal online mode of license borrowing is resumed.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates a schematic representation of an exemplary first computer node of a peer to peer software license management system of the invention;
FIGURE 2 illustrates a schematic representation of a first computer node of the invention accessing a software license from a second computer node of the invention;
FIGURE 3 illustrates a schematic representation of a first computer node of the invention temporarily borrowing a software license from a second computer node of the invention;
FIGURE 4 illustrates a schematic representation of a third computer node of the invention accessing a temporarily borrowed software license from the first computer node of the invention;
FIGURE 5 illustrates a flow chart showing the steps of an advantageous embodiment of a method of the present invention;
FIGURE 6 illustrates a flow chart showing the steps of another advantageous embodiment of a method of the present invention;
FIGURE 7 illustrates a schematic representation of exemplary software modules in accordance with the principles of the present invention; and
FIGURE 8 illustrates a flow chart showing the steps of another advantageous embodiment of a method of the present invention.

### DETAILED DESCRIPTION

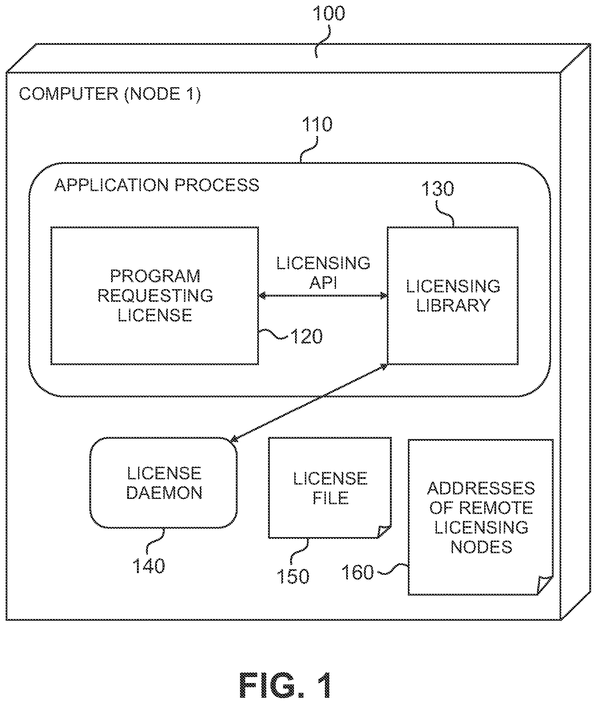

FIGURES 1 through 8 and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

Every computer that participates in the peer to peer software license management system of the invention is referred to as a node. In a peer to peer system, each node can accept incoming connections from other nodes and each node can initiate outgoing connections to other nodes. This feature distinguishes a peer to peer system from a client-server system. In a client-server system, only client nodes can initiate outgoing connections and only server nodes can accept incoming connections.

FIGURE 1 illustrates a schematic representation of an exemplary first computer node 100 (also designated as node 1) of the peer to peer software license management system of the invention. First computer node 100 is representative of each of the other nodes in the system (not shown in FIGURE 1). As shown in FIGURE 1, first computer node 100 comprises an application process 110. Application process 110 comprises at least one program 120 and a licensing library 130. The licensing library 130 contains one or more software licenses. The program 120 is capable of accessing the licensing library 130 through a licensing application programming interface (designated as "Licensing API" in FIGURE 1).

First computer node 100 also comprises a continuously running program that is referred to as a license service 140 or a license daemon 140. The license daemon 140 is connected to and in communication with the licensing library 130. The licensing library 130 is capable of accessing the license daemon 140 to pass on to the license daemon 140 any license requests that are made by the program 120.

First computer node 100 also comprises an encrypted license file 150. The encrypted license file 150 contains the names of authorized license consumers and the names of the licenses that they are authorized to receive. The license daemon 140 is connected to and in communication with the encrypted license file 150. The license daemon 140 is capable of reading the authorization information in the encrypted license file 150 and serving the requested licenses to the license consumers that have the proper authorization.

First computer node 100 also comprises an address file 160 that contains computer addresses of remotely located licensing nodes in the peer to peer system. The license daemon 140 is connected to and in communication with the address file 160. The license daemon 140 is capable of communicating with the remotely located nodes in the peer to peer system.

The standard computer hardware of computer node 100 (central processing unit, memory units, etc.) and the standard computer software of computer node 100 (operating system, etc.) together with the software of the peer to peer software license management system of the invention (license daemon, license file, licensing library, etc.) comprises a software license management controller that performs the functions of the present invention.

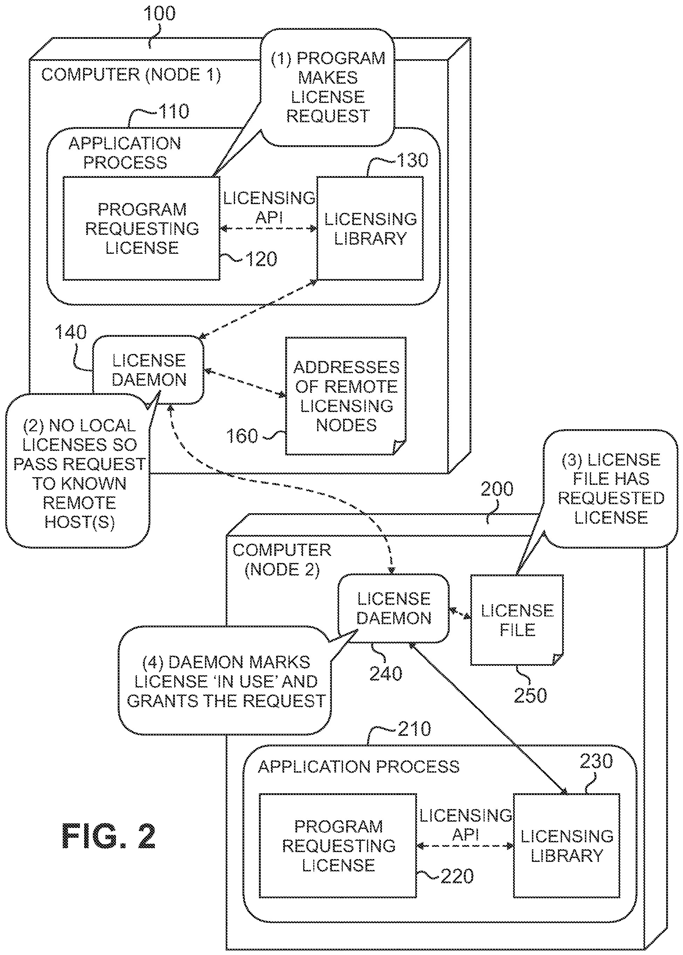

FIGURE 2 illustrates a schematic representation of the first computer node 100 accessing a software license from a second computer node 200 of the peer to peer system of the invention. Second computer node 200 comprises an application process 210 that comprises at least one program 220 and a licensing library 230. Second computer node 200 also comprises its own license daemon 240 and encrypted license file 250. Although not shown in FIGURE 2, the second computer node 200 also comprises an address file that contains computer addresses of remotely located licensing nodes in the peer to peer system.

FIGURE 2 illustrates how the first computer node 100 may access a software license from the second computer node 200 in the peer to peer system. When the at least one program 120 makes a license request, the licensing library 130 sends the request to the license daemon 140. The license daemon 140 first attempts to access (or to "check out") the requested license from its own encrypted license file 150 (not shown in FIGURE 2). If the requested license is in the encrypted license file 150, then the license daemon 140 provides the requested license to the program 120 from the licensing library 130.

If the requested license is not in the encrypted license file 150 (i.e., the requested license is not locally available), then the license daemon 140 passes the license request to the known remote nodes (which are also referred to as remote hosts). FIGURE 2 illustrates the connection and communication between license daemon 140 of the first computer node 100 and the license daemon 240 of the second computer node 200.

The license daemon 240 accesses its own encrypted license file 250 to determine whether the requested license is located within the second computer node 200. If the requested license is located within the encrypted license file 250, then the license daemon 240 marks the requested license as being in use and grants the license request. The license daemon 240 provides the requested license to the license daemon 140 from the licensing library 230. The license daemon 140 provides the requested license to the licensing library 130 and to the requesting program 120.

If the requested license is not located within the encrypted license file 250 in the second computer node 200, then the license daemon 240 reports that finding back to the license daemon 140 in the first computer node 100.

When the license daemon 140 sends out a license request to the other nodes in the peer to peer network, the other nodes will cascade the request to other nodes in their local address list (if any) until the requested license is found or the license search fails due the lack of availability of the requested license on any node that is connected in the peer to peer network.

In the search for a requested license, a success or a failure will be reported back to the requesting program 120 via the API link. A successfully accessed license will eventually be returned to the remote computer node from which the license came (1) when the requesting program 120 releases the license via the API link or (2) when the requesting program 120 terminates. Returning the license to the remote computer node from which the license came requires the local license daemon 140 to track where the license originated and to communicate with the license daemon on the remote computer node (e.g., license daemon 240 in our present example) to inform the license daemon on the remote computer node of the eventual release of the requested license. After the requested license has been released, the license daemon on the remote computer node that provided the requested license from its local encrypted license file releases the license back into the local pool of licenses that are eligible for a subsequent license.

In order prevent abuse of license entitlement, the license daemon of the computer node that provides the requested license generates and sends an occasional "all is well" signal (referred to as a "heartbeat") to all of the other computer nodes that are participating in a license access (also referred to as a license "checkout"). If for some reason the heartbeat signal is not acknowledged as expected, then the heartbeat signal is said to have failed. If the heartbeat signal fails, then all license daemons that are involved in the license checkout process immediately consider that the license checkout process has failed.

The failure of the heartbeat signal results in the requesting program (e.g., program 120) being informed via the API link that a license that it had successfully requested is now unavailable and that the previously successful license request has been terminated. The license daemon that provided the requested license from its local encrypted license file then releases the license back into the local pool of licenses that are eligible for a subsequent license. No heartbeat signal is required when a license request is satisfied from a local license file.

In addition to being checked out, licenses can also be borrowed. Borrowing a license entails relocating a license from one license file to another license file for a predetermined (but finite) period of time.

A license daemon in a computer node can request to borrow one or more licenses from another computer node. The license borrowing process is conceptually similar to a normal license check out process from one node to another. But there is no heartbeat signal maintained between the two nodes that are involved in the borrowing transaction. This is so that the borrowing node can be disconnected from the network of the donor node and continue to use the borrowed license while the borrowing node is offline (i.e., not connected to the peer to peer network). The donor node considers that the borrowed license has been checked out. But the borrowing node considers the borrowed license to be available for check out by programs that are running locally on the borrowing node.

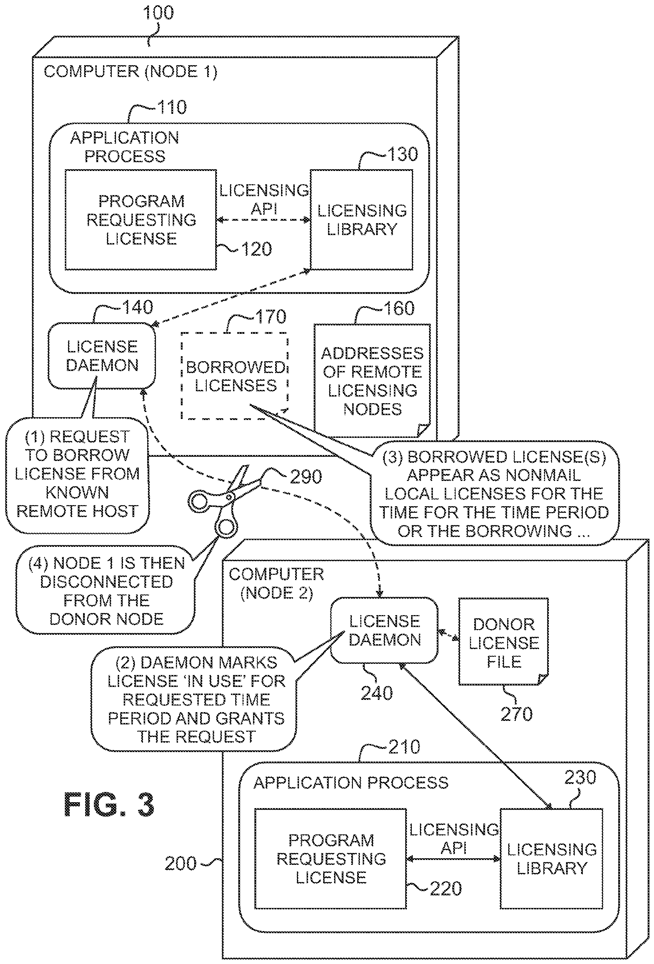

FIGURE 3 illustrates how the first computer node 100 may temporarily borrow a software license from the second computer node 200 in the peer to peer system. When the at least one program 120 makes a license request, the licensing library 130 sends the request to the license daemon 140. The license daemon 140 first attempts to access (or to "check out") the requested license from its own encrypted license file 150 (not shown in FIGURE 3). If the requested license is in the encrypted license file 150, then the license daemon 140 provides the requested license to the program 120 from the licensing library 130.

If the requested license is not in the encrypted license file 150 (i.e., the requested license is not locally available), then the license daemon 140 may issue a request to borrow the license from one of the known remote nodes (which are also referred to as remote hosts). FIGURE 3 illustrates the connection and communication between license daemon 140 of the first computer node 100 and the license daemon 240 of the second computer node 200. Although not shown in FIGURE 3, the second computer node 200 comprises a previously mentioned address file that contains computer addresses of remotely located licensing nodes in the peer to peer system.

The license daemon 240 accesses a donor license file 270 to determine whether the requested license is a license that is authorized to be "loaned" out as a borrowed license. If the requested license is located within the donor license file 270, then the license daemon 240 marks the requested license as being in use for the requested time period and grants the license request. The license daemon 240 provides the requested borrowed license to the license daemon 140 from the licensing library 230. The license daemon 140 stores the requested borrowed license in a borrowed licenses file 170 and allows the requesting program 120 to access the requested borrowed license.

If the requested borrowed license is not located within the donor license file 270, then the license daemon 240 reports that finding back to the license daemon 140 in the first computer node 100.

When the license daemon 140 sends out a request to borrow a license to the other nodes in the peer to peer network, the other nodes will cascade the request to other nodes in their local address list (if any) until the requested license is found or the license search fails due the lack of availability of the requested license on any node that is connected in the peer to peer network.

As previously mentioned, when the license daemon 240 sends the borrowed license to the license daemon 140, the license daemon 140 stores the borrowed license in the borrowed licenses file 170. The borrowed licenses that are stored in the borrowed licenses file 170 in the first computer node 100 appear as normal local licenses during the requested time period (i.e., the "lifetime" of the borrowed license).

After the borrowed license is successfully stored in the borrowed licenses file 170 in the first computer node 100, the network connection between the license daemon 140 of first computer node 100 and the license daemon 240 of the second computer node 200 is severed. The severance is schematically represented in FIGURE 3 with the scissors symbol 290. The borrowing node (first computer node 100 in our present example) may continue to use the borrowed license while offline (i.e., not connected to the peer to peer network).

The borrowing node (first computer node 100 in our present example) may check the borrowed license back into the donor node (second computer node 200 in our present example) at any time the borrowing node and the donor node are connected on a common network. Checking the borrowed license back into the donor node ends the period of borrowing.

To secure the borrowing transaction and enforce the time limit for the borrowed license, it is necessary to specify a maximum borrowing time limit at the time when the borrowed license is borrowed. The maximum borrowing time limit (also referred to as the "timeout" value) is tracked independently by both the donor node and the borrowing node. If the timeout value expires before the borrowed license is returned to the donor node from the borrowing node, then the borrowed license will automatically be disabled on the borrower node and will automatically be enabled on the donor node (i.e., checked back into the donor node).

During the time that the borrowed license is still within the timeout value, the borrowed license remains valid. Furthermore, a valid borrowed license is considered to be available for checkout from the borrowing node. Due to the peer to peer capabilities of the network, the borrowed license is not restricted to checkout only by programs that are running on the borrowing node. That is, the borrowed license may be served to other connecting nodes that request it. This means that a license can be temporarily relocated from a donor node (that acts as a license server) to a borrowing node (that subsequently goes offline with respect to the donor node) and the borrowing node can subsequently act as a license server for the borrowed license.

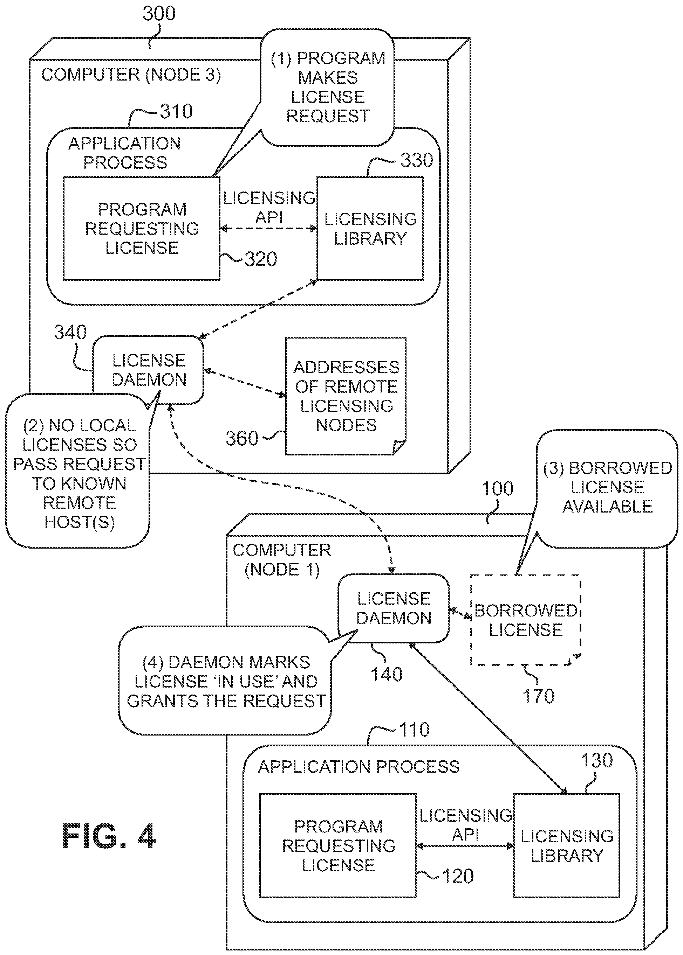

FIGURE 4 illustrates how the first computer node 100 may act as a license server for a borrowed license and serve the borrowed license to a third computer node 300 in the peer to peer system. Third computer node 300 comprises an application process 310 that further comprises at least one program 320 and a licensing library 330. Third computer node 300 also comprises its own license daemon 340 and address file 360. Although not shown in FIGURE 4, the third computer node 300 also comprises an encrypted license file.

When the at least one program 320 makes a license request, the licensing library 330 sends the request to the license daemon 340. The license daemon 340 first attempts to access (or to "check out") the requested license from its own encrypted license file (not shown in FIGURE 4). If the requested license is in the encrypted license file, then the license daemon 340 provides the requested license to the program 320 from the licensing library 330.

If the requested license is not in the encrypted license file (i.e., the requested license is not locally available), then the license daemon 340 may issue a request to access (or "check out") the license from one of the known remote nodes (which are also referred to as remote hosts). FIGURE 4 illustrates the connection and communication between license daemon 340 of the third computer node 300 and the license daemon 140 of the first computer node 100. Although not shown in FIGURE 4, the first computer node 100 comprises an encrypted license file 150 and an address file 160 that contains computer addresses of remotely located licensing nodes in the peer to peer system.

The license daemon 140 accesses the borrowed licenses file 170 to determine whether the requested license is available. If the requested license is located within the borrowed licenses file 170, then the license daemon 140 marks the requested license as being in use and grants the license request. The license daemon 140 provides the requested license to the licensing daemon 340 from the borrowed licenses file 170. The license daemon 340 provides the borrowed license to the licensing library 330 and to the requesting program 320.

If the requested license is not located within the borrowed licenses file 170, then the license daemon 140 reports that finding back to the license daemon 340 in the third computer node 300.

When the license daemon 340 sends out a request to access a license to the other nodes in the peer to peer network, the other nodes will cascade the request to other nodes in their local address list (if any) until the requested license is found or the license search fails due the lack of availability of the requested license on any node that is connected in the peer to peer network.

As previously mentioned, when the license daemon 140 sends the borrowed license to the license daemon 340, the license daemon 340 provides the borrowed license to the program 320. The first computer node 100 is a borrowing node that has gone offline with respect to the original donor node (second computer node 200). In this manner, the first computer node 100 acts in turn as a license server that serves the previously borrowed license to the third computer node 300.

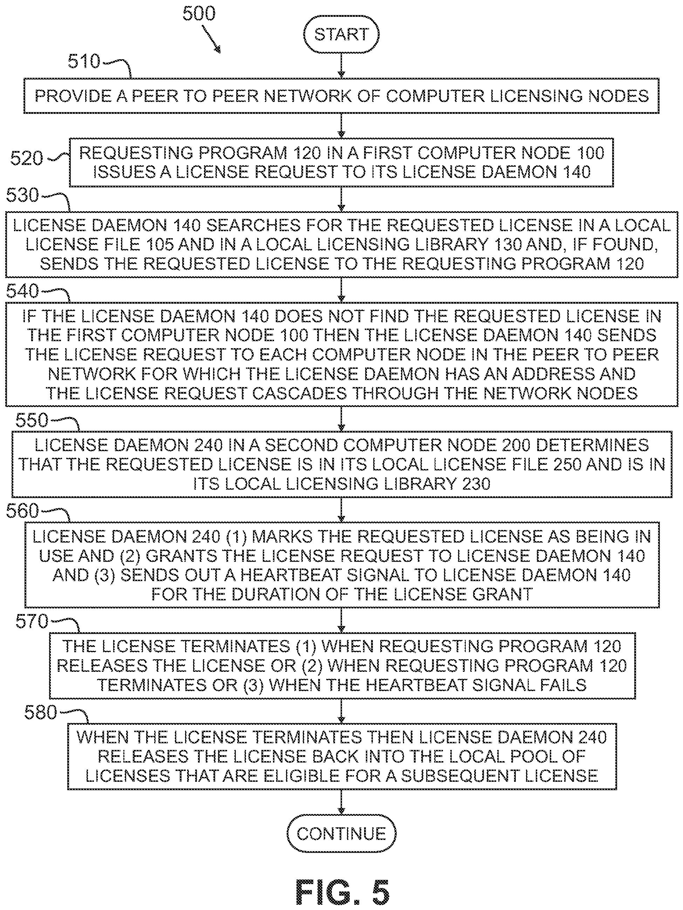

FIGURE 5 illustrates a flow chart 500 that shows the steps of an advantageous embodiment of a method of the present invention. In the first step, a peer to peer network of computer licensing nodes is provided (step 510). Then a requesting program 120 in a first computer node 100 issues a license request to its license daemon 140 (step 520). The license daemon 140 searches for the requested license in a local license file 150 and in a local licensing library 130 and, if found, sends the requested license to the requesting program 120 (step 530).

If the license daemon 140 does not find the requested license in the first computer node 100 then the license daemon 140 sends the license request to each computer node in the peer to peer network for which the license daemon 140 has an address and the license request cascades through the network nodes (step 540). Then a license daemon 240 in a second computer node 200 determines that the requested license is in its local license file 250 and is in its local licensing library 230 (step 550).

Then the license daemon 240 (1) marks the requested license as being in use and (2) grants the license request to license daemon 140 and (3) sends out a heartbeat signal to license daemon 140 for the duration of the license grant (step 560). The license terminates when (1) requesting program 120 releases the license or (2) when requesting program 120 terminates or (3) when the heartbeat signal fails (step 570). When the license terminates then license daemon 240 releases the license back into the local pool of licenses that are eligible for a subsequent license (step 580).

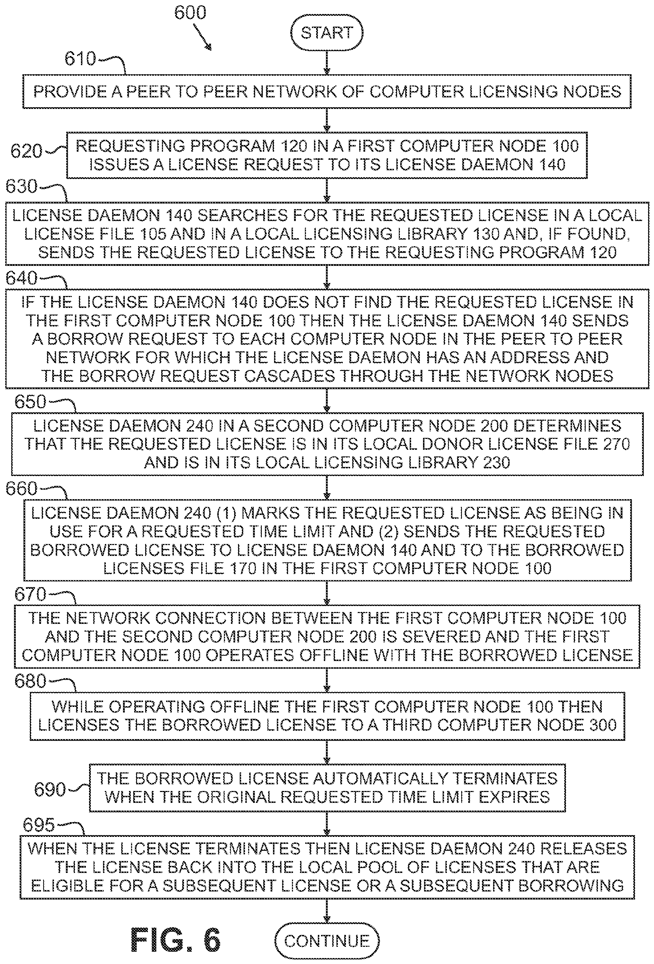

FIGURE 6 illustrates a flow chart 600 that shows the steps of another advantageous embodiment of a method of the present invention. In the first step, a peer to peer network of computer licensing nodes is provided (step 610). Then a requesting program 120 in a first computer node 100 issues a license request to its license daemon 140 (step 620). The license daemon 140 searches for the requested license in a local license file 150 and in a local licensing library 130 and, if found, sends the requested license to the requesting program 120 (step 630).

If the license daemon 140 does not find the requested license in the first computer node 100 then the license daemon 140 sends a borrow request to each computer node in the peer to peer network for which the license daemon 140 has an address and the borrow request cascades through the network nodes (step 640). Then a license daemon 240 in a second computer node 200 determines that the requested license is in its local donor file 270 and is in its local licensing library 230 (step 650).

Then the license daemon 240 (1) marks the requested license as being in use for a requested time limit and (2) sends the requested borrowed license to license daemon 140 and to the borrowed licenses file 270 in the first computer node 100 (step 660). The network connection between the first computer node 100 and the second computer node 200 is then severed and the first computer node 100 operates offline with the borrowed license (step 670).

While operating offline the first computer node 100 then licenses the borrowed license to a third computer node 300 (step 680). The borrowed license automatically terminates when the original requested time limit expires (step 690). When the borrowed license terminates then license daemon 240 releases the borrowed license back into the local pool of licenses that are eligible for a subsequent license or a subsequent borrowing (step 695).

The relative cost of borrowed licenses is high given that a borrowed license is considered in use throughout the duration of the license. This is so even though the licensed software on the client server of the license consumer may not be in continuous use while the client server is disconnected from the network. For this reason, license borrowing is not normally automated because license borrowing reduces customer entitlement without accurately and fairly reflecting actual license usage.

The present invention employs a mechanism that monitors network performance and, in response to the monitored level of network performance, automatically borrows and returns short-term licenses without user interaction or knowledge. The mechanism of the invention has two purposes. The first purpose is to ensure continuous licensing of executing software during periods of network instability. The second purpose is to enable efficient licensing of highly periodic software execution in systems that function in a disconnected or intermittently connected mode (such as web services).

The duration of each borrowed license is adaptive and brief in order to fit actual usage as nearly as possible. This ensures fairness and avoids the disadvantage of the high cost of the normal mode of license borrowing.

The present invention monitors the recent history of licenses that are lost due to network interruptions. In response to the performance of the network, the present invention changes the operational mode of the license borrowing process. In the "fault tolerance" mode of operation of the license borrowing process, the present invention switches to short term license borrowing in place of the normal online mode of license borrowing. In the "service licensing" mode of operation of the license borrowing process, the present invention switches to borrowing licenses as if for offline use for short time periods. In the service licensing mode of operation, the length of the short time periods is selected to cover the likely periods of intermittent usage typical of web services.

The fault tolerance mode of operation and the service licensing mode of operation are mutually exclusive modes of operation. The present invention functions in either of the two modes of operation of license borrowing (in addition to being able to function in the normal mode of operation of online license borrowing). That is, there are three mutually exclusive modes of operation. The first is "fault tolerance" mode of operation of license borrowing. The second is "service licensing" mode of operation of license borrowing. The third is the normal mode of online license borrowing.

The software license management system of the present invention comprises (1) a license borrowing mechanism that is capable of temporarily licensing the operation of software for a license consumer that subsequently goes offline with respect to the license provider, and (2) a mechanism for testing a communication link between the license consumer (the client server) and the license provider (the license server), and (3) an executive logic layer software module that is located on the license consumer (the client server). The operation of the executive logic layer software module will be described more fully below.

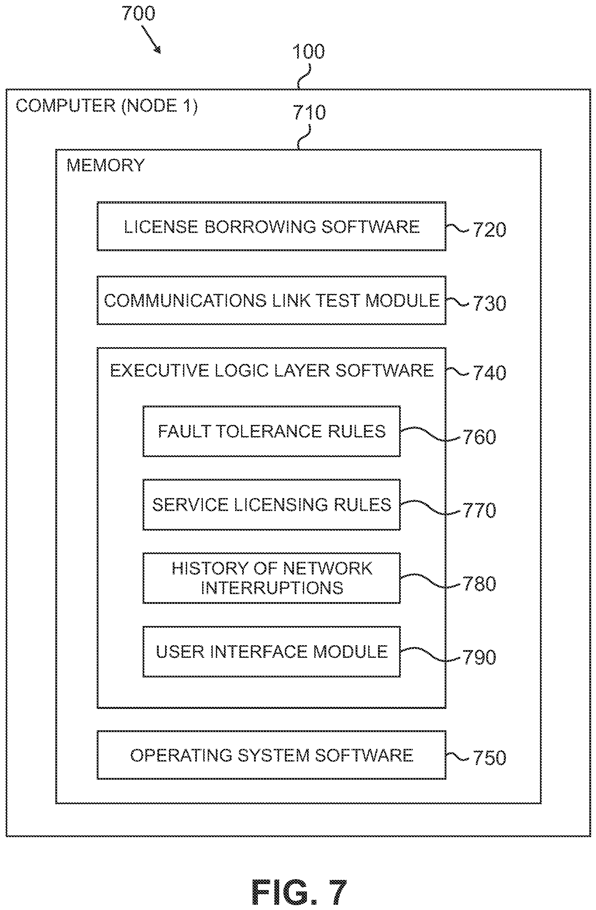

FIGURE 7 illustrates a schematic representation of exemplary software modules in accordance with the principles of the present invention. The exemplary software modules that are represented in FIGURE 7 are located within a computer node 100. The computer node 100 comprises a memory 710 that contains the exemplary software modules.

The license borrowing software that has been previously described in this document is designated with the reference numeral 720. The mechanism for testing a communication link between the license consumer (the client server) and the license provider (the license server) comprises a communications link test module that is designated with the reference numeral 730. The executive logic layer software module is designated with the reference numeral 740. The operating system software of computer node 100 is designated with the reference numeral 750.

The executive logic layer software module 740 comprises a set of fault tolerance rules 760, and a set of service licensing rules 770, a history of network interruptions 780, and a user interface module 790. The individual modules will also be described more fully below.

The standard computer hardware of computer node 100 (central processing unit, memory units, etc.) and the standard computer software of computer node 100 (operating system software 750, etc.) together with the software modules of the software license management system of the invention (licensing borrowing software 720, communications link test module 730, executive logic layer software 740, etc.) comprises a software license management controller that performs the functions of the present invention.

The executive logic layer software module 740 employs the communication link test module 730 to monitor the level of network performance of the link between the license consumer (here, computer node 100) and the license provider (not shown in FIGURE 7). For convenience of expression, the executive logic layer software module 740 will sometimes be referred to using the letters ELL. The letters ELL stand for and represent the "executive logic layer." The ELL can be implemented as an adjunct to an existing software licensing manager. Alternatively, the ELL can be implemented as an integrated component of a software licensing manager.

When network interruptions occur, the ELL records the network interruptions in the history of network interruptions 780. When a network interruption occurs, the software licensing manager causes the ELL to apply the fault tolerance rules 760 (described below) and to apply the service licensing rules 770 (described below) to determine which license borrowing mode of operation to initiate in response to the network interruption.

If the provisions of the fault tolerance rules 760 are met, then the ELL enables the fault tolerance mode of operation. Then the ELL will automatically execute the short term borrowing of software licenses in place of the normal online license borrowing mode of operation. This will ensure the continuous licensing of the executing software during periods of network instability and provide the necessary fault tolerance.

The ELL continues to monitor the level of network performance while the fault tolerance mode of operation is active. When the ELL determines that the fault tolerance mode of operation is no longer needed, the ELL enables the normal mode of operation. The software license manager then resumes the normal online mode of license borrowing.

If the provisions of the fault tolerance rules 760 are not met but the provisions of the service licensing rules 770 are met, then the ELL enables the service licensing mode of operation. Then the ELL will automatically borrow licenses as if for offline use for short periods. In the service licensing mode of operation, the length of the short time periods is selected to cover the likely periods of intermittent usage typical of web services. The service licensing mode of operation is used in place of the normal online license borrowing mode of operation. This will ensure the efficient licensing of highly periodic software execution in systems that function in a disconnected or intermittently connected mode (such as web services).

The ELL continues to monitor the level of network performance while the service licensing mode of operation is active. When the ELL determines that the service licensing mode of operation is no longer needed, the ELL enables the normal mode of operation. The software license manager then resumes the normal online mode of license borrowing.

When short term licenses are borrowed under the control of the ELL, the ELL independently monitors the network and tracks the remaining license timeout value in order to renew the short term licenses or return them and resume the normal online mode of license borrowing. The ELL makes its decisions independently of the software license manager. That is, the software license manager is unaware of the decisions that are being made and carried out by the ELL with regard to the short term license borrowing operations. The software license manager simply responds to application programming interface (API) calls to borrow or return licenses as if a user were instructing it through a software license manager graphical user interface (GUI).

The fault tolerance rules 760 determine when the ELL will start and stop the automated short term license borrowing operations in place of the normal online network license borrowing operation. The fault tolerance rules 760 comprise the following: (1) a specified value of an average duration of recent network outages in order to qualify for fault tolerance operation (small outages on the order of fractions of a second will be ignored), (2) a specified value of a time window for past outage events to be considered for fault tolerance operation, (3) a specified value of a time duration of automatically borrowed (short term) licenses, (4) a specified value of a time between probes of the network during automatic borrowing to test if connectivity has stabilized and automatic borrowing can be terminated, and (5) whether to inform to user of the commencement and termination of automatic borrowing or operate quietly without informing the user of the status of the automatic borrowing operation.

The service licensing rules 770 determine when the ELL will start and stop the automated service licensing borrowing operations in place of the normal online network license borrowing operation. The service licensing rules 770 comprise the following: (1) a specified value of an average time between recent network connections to a licensed web service (service invocations), (2) a specified value of a time window for past connections to qualify for inclusion in calculating an average time between web service invocations, (3) a specified initial value for time duration of automatically borrowed (short term) licenses when insufficient data exists in the specified time window to calculate a duration, and (4) whether to enable or suppress the operation of the executive logic layer (ELL).

The executive logic layer (ELL) is visible to the end user as a rule set. The executive logic layer (ELL) is therefore customizable by the end user through the user interface module 790.

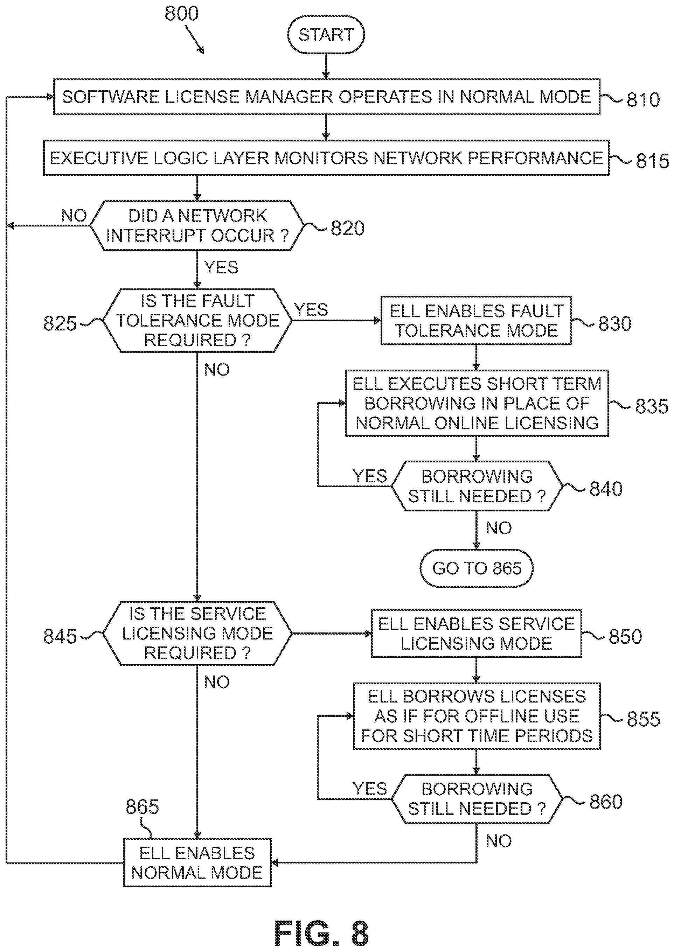

FIGURE 8 illustrates a flow chart 800 showing the steps of an advantageous embodiment of a method of the present invention. In the first step of the method the software license manager operates in a normal online mode of license borrowing (step 810). The executive logic layer (ELL) monitors the network performance (step 815). The ELL determines if a network interrupt occurs (step 820). If no network interrupt occurs, then control passes back to step 810 and the software license manager continues to operate in the normal mode of operation (step 810).

If a network interrupt occurs, then the software license manager causes the ELL to begin alternate license borrowing operations. The ELL uses the fault tolerance rules 760 to determine if the fault tolerance mode is required (decision step 825). If the fault tolerance mode is required, then the ELL enables the fault tolerance mode (step 830). Then the ELL executes short term license borrowing in place of the normal online licensing (step 840).

The ELL monitors the network performance to determine whether the short term license borrowing is still needed (decision step 840). If the short term license borrowing is still needed, control passes back to step 835. If the short term license borrowing is no longer needed, then control passes to step 865 where the ELL enables the normal mode of operation (step 865). Control then passes back to step 810.

If the fault tolerance mode is not required at step 825, then the ELL uses the service licensing rules 770 to determine if the service licensing mode is required (decision step 845). If the service licensing mode is required, then the ELL enables the service licensing mode (step 850). Then the ELL executes short term license borrowing as if for offline use for short time periods (step 855). In the service licensing mode of operation, the length of the short time periods is selected to cover the likely periods of intermittent usage typical of web services.

The ELL monitors the network performance to determine whether the short term license borrowing using the service mode of operation is still needed (decision step 860). If the short term license borrowing is still needed, control passes back to step 855. If the short term license borrowing is no longer needed, then control passes to step 865 where the ELL enables the normal mode of operation (step 865). Control then passes back to step 810.

It may be advantageous to set forth definitions of certain words and phrases used throughout this patent document. The terms "application," "program," and "routine" refer to one or more computer programs, sets of instructions, procedures, functions, objects, classes, instances, or related data adapted for implementation in a suitable computer language. The term "couple" and its derivatives refer to any direct or indirect communication between two or more elements, whether or not those elements are in physical contact with one another.

The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "controller" means any device, system, or part thereof that controls at least one operation. A controller may be implemented in hardware, firmware, software, or some combination of at least two of the same. The functionality associated with any particular controller may be centralized or distributed, whether locally or remotely.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of the invention, as defined by the following claims.

## Claims

1. An apparatus for managing software licenses for a plurality of computer nodes comprising computers (100, 200, 300) connected together in a peer-to-peer computer network, the apparatus comprising:
a software license management controller comprising at least one processing unit (100, 200, 300) and at least one memory unit (710), wherein the at least one processing unit is configured to execute program code (720, 740, 750) stored in the at least one memory unit to cause the software license management controller to:
store a set of fault tolerance rules (760) for determining whether to operate in a fault tolerance mode of operation of license borrowing and a set of service licensing rules (770) for determining whether to operate in a service licensing mode of operation of license borrowing;
monitor a performance of the network while operating in a normal online mode of operation of license borrowing;
determine, in response to an interruption in the network performance, whether to operate in the fault tolerance mode of operation of license borrowing or the service licensing mode of operation of license borrowing based on the performance of the network, the set of fault tolerance rules, and the set of service licensing rules;
operate in the determined mode;
monitor the performance of the network to determine whether to continue operation in the determined mode; and
resume, in response to determination that operation in the determined mode is no longer needed, operation in the normal online mode of operation.

2. The apparatus as set forth in claim 1, wherein the software license management controller further comprises:
a license borrowing module (720);
a communications test link module (730) that is configured to test a communication link between a license consumer and a license provider; and
an executive logic layer software module (740).

3. The apparatus as set forth in claim 2, wherein the license borrowing module is configured to temporarily license an operation of a software application (120) to the license consumer that subsequently goes offline with respect to the license provider.

4. The apparatus as set forth in claim 2, wherein the executive logic layer software module comprises:
the set of fault tolerance rules;
the set of service licensing rules; and
a history of network interruptions.

5. The apparatus as set forth in claim 4, wherein the executive logic layer software module is configured to employ the communications test link module to monitor the performance of the network.

6. A method for managing software licenses for a plurality of computer nodes comprising computers (100, 200, 300) in a peer-to-peer computer network, the method comprising:
operating, by a processing unit (100, 200, 300), a software license management controller;
storing a set of fault tolerance rules (760) for determining whether to operate in a fault tolerance mode of operation of license borrowing and a set of service licensing rules (770) for determining whether to operate in a service licensing mode of operation of license borrowing;
monitoring a performance of the network while operating the software license management controller in a normal online mode of operation of license borrowing;
determining, in response to an interruption in the network performance, whether to operate in the fault tolerance mode of operation of license borrowing or the service licensing mode of operation of license borrowing based on the performance of the network, the set of fault tolerance rules, and the set of service licensing rules;
operating the software license management controller in the determined mode;
monitoring the performance of the network to determine whether to continue operation in the determined mode; and
resuming, in response to a determination that operation in the determined mode is no longer needed, operation in the normal online mode of operation.

7. The method as set forth in claim 6, wherein the software license management controller comprises:
a license borrowing module (720);
a communications test link module (730) that is configured to test a communication link between a license consumer and a license provider; and
an executive logic layer software module (740).

8. The method as set forth in claim 7, further comprising: using (520-580, 620-695) the license borrowing module to temporarily license an operation of a software application (120) to the license consumer that subsequently goes offline with respect to the license provider.

9. The method as set forth in claim 7, wherein the executive logic layer software module comprises:
the set of fault tolerance rules;
the set of service licensing rules; and
a history of network interruptions.

10. The method as set forth in claim 7, wherein determining whether to operate in the fault tolerance mode or the service licensing mode comprises:
receiving data from the set of fault tolerance rules and data from the history of network interruptions; and
selecting the fault tolerance mode of operation of license borrowing in response to the data received from the set of fault tolerance rules and the history of network interruptions

## Patentansprüche

1. Vorrichtung zum Verwalten von Softwarelizenzen für eine Mehrzahl von Computerknoten, die Computer (100, 200, 300) umfassen, die in einem Partner-zu-Partner-Computernetzwerk miteinander verbunden sind, wobei die Vorrichtung umfasst:
eine Softwarelizenzverwaltungssteuerung, die mindestens eine Verarbeitungseinheit (100, 200, 300) und mindestens eine Speichereinheit (710) umfasst, wobei die mindestens eine Verarbeitungseinheit so konfiguriert ist, dass sie Programmcode (720, 740, 750) ausführt, der in der mindestens einen Speichereinheit gespeichert ist, um die Softwarelizenzverwaltungssteuerung zu veranlassen zum:
Speichern eines Satzes von Fehlertoleranzregeln (760) zum Bestimmen, ob in einem Fehlertoleranzbetriebsmodus von Lizenzentleihung gearbeitet werden soll, und eines Satzes von Dienstlizenzierungsregeln (770) zum Bestimmen, ob in einem Dienstlizenzierungsbetriebsmodus von Lizenzentleihung gearbeitet werden soll;
Überwachen einer Performance des Netzwerks, während in einem normalen Online-Betriebsmodus von Lizenzentleihung gearbeitet wird;
Bestimmen in Reaktion auf eine Unterbrechung der Netzwerk-Performance, ob im Fehlertoleranzbetriebsmodus von Lizenzentleihung oder Dienstlizenzierungsbetriebsmodus von Lizenzentleihung gearbeitet werden soll, basierend auf der Performance des Netzwerks, des Satzes von Fehlertoleranzregeln und des Satzes von Dienstlizenzierungsregeln;
Arbeiten im bestimmten Modus;
Überwachen der Performance des Netzwerks, um zu bestimmen, ob der Betrieb im bestimmten Modus fortgesetzt werden soll; und
Wiederaufnehmen des Betriebs im normalen Online-Betriebsmodus in Reaktion auf eine Bestimmung, dass der Betrieb im bestimmten Modus nicht mehr nötigt ist.

2. Vorrichtung nach Anspruch 1, wobei die Software Lizenzverwaltungssteuerung ferner umfasst:
ein Lizenzentleihungsmodul (720);
ein Kommunikationsverbindungsprüfmodul (730), das zum Prüfen einer Kommunikationsverbindung zwischen einem Lizenznehmer und einem Lizenzgeber konfiguriert ist; und
ein ausführendes Logikschicht-Softwaremodul (740).

3. Vorrichtung nach Anspruch 2, wobei das Lizenzentleihungsmodul so konfiguriert ist, dass es eine Lizenz für einen Betrieb einer Softwareanwendung (120) temporär an den Lizenznehmer vergibt, der anschließend in Bezug auf den Lizenzgeber offline geht.

4. Vorrichtung nach Anspruch 2, wobei das ausführendes Logikschicht-Softwaremodul umfasst:
den Satz von Fehlertoleranzregeln;
den Satz von Dienstlizenzierungsregeln; und
einen Verlauf von Netzwerkunterbrechungen.

5. Vorrichtung nach Anspruch 4, wobei das ausführende Logikschicht-Softwaremodul so konfiguriert ist, dass es das Kommunikationsverbindungsprüfmodul zum Überwachen der Performance des Netzwerks einsetzt.

6. Verfahren zur Verwaltung von Softwarelizenzen für eine Mehrzahl von Computerknoten, die Computer (100, 200, 300) in einem Partner-zu-Partner-Computernetzwerk umfassen, wobei das Verfahren umfasst:
Betreiben einer Softwarelizenzverwaltungssteuerung durch eine Verarbeitungseinheit (100, 200, 300);
Speichern eines Satzes von Fehlertoleranzregeln (760) zum Bestimmen, ob in einem Fehlertoleranzbetriebsmodus von Lizenzentleihung gearbeitet werden soll, und eines Satzes von Dienstlizenzierungsregeln (770) zum Bestimmen, ob in einem Dienstlizenzierungsbetriebsmodus von Lizenzentleihung gearbeitet werden soll;
Überwachen einer Performance des Netzwerks, während die Softwarelizenzverwaltungssteuerung in einem normalen Online-Betriebsmodus von Lizenzentleihung arbeitet;
Bestimmen in Reaktion auf eine Unterbrechung der Netzwerk-Performance, ob im Fehlertoleranzbetriebsmodus von Lizenzentleihung oder Dienstlizenzierungsbetriebsmodus von Lizenzentleihung gearbeitet werden soll, basierend auf der Performance des Netzwerks, des Satzes von Fehlertoleranzregeln und des Satzes von Dienstlizenzierungsregeln;
Betreiben der Softwarelizenzverwaltungssteuerung im bestimmten Modus;
Überwachen der Performance des Netzwerks, um zu bestimmen, ob der Betrieb im bestimmten Modus fortgesetzt werden soll; und
Wiederaufnehmen des Betriebs im normalen Online-Betriebsmodus in Reaktion auf eine Bestimmung, dass der Betrieb im bestimmten Modus nicht mehr nötigt ist.

7. Verfahren nach Anspruch 6, wobei die Softwarelizenzverwaltungssteuerung umfasst:
ein Lizenzentleihungsmodul (720);
ein Kommunikationsverbindungsprüfmodul (730), das zum Prüfen einer Kommunikationsverbindung zwischen einem Lizenznehmer und einem Lizenzgeber konfiguriert ist; und
ein ausführendes Logikschicht-Softwaremodul (740).

8. Verfahren nach Anspruch 7, ferner umfassend:
derartiges Verwenden (520-580, 620-695) des Lizenzentleihungsmoduls, dass es eine Lizenz für einen Betrieb einer Softwareanwendung (120) temporär an den Lizenznehmer vergibt, der anschließend in Bezug auf den Lizenzgeber offline geht.

9. Verfahren nach Anspruch 7, wobei das ausführende Logikschicht-Softwaremodul umfasst:
den Satz von Fehlertoleranzregeln;
den Satz von Dienstlizenzierungsregeln; und
einen Verlauf von Netzwerkunterbrechungen.

10. Verfahren nach Anspruch 7, wobei das Bestimmen, ob im Fehlertoleranzmodus oder im Dienstlizenzierungsmodus gearbeitet werden soll, umfasst:
Empfangen von Daten aus dem Satz von Fehlertoleranzregeln und Daten aus dem Verlauf von Netzwerkunterbrechungen; und
Auswählen des Fehlertoleranzbetriebsmodus von Lizenzentleihung in Reaktion auf die Daten, die aus dem Satz von Fehlertoleranzregeln und dem Verlauf von Netzwerkunterbrechungen empfangen werden.

## Revendications

1. Appareil de gestion de licences de logiciel pour une pluralité de noeuds informatiques comprenant des ordinateurs (100, 200, 300) connectés ensemble dans un réseau informatique poste à poste, l'appareil comprenant:
un contrôleur de gestion de licences de logiciel comprenant au moins une unité de traitement (100, 200, 300) et au moins une unité de mémoire (710), dans lequel l'au moins une unité de traitement est configurée pour exécuter un code de programme (720, 740, 750) mémorisé dans l'au moins une unité de mémoire pour amener le contrôleur de gestion de licences de logiciel à :
mémoriser un ensemble de règles de tolérance de pannes (760) pour déterminer qu'il convient de fonctionner ou non dans un mode opérationnel d'octroi de licence à tolérance de pannes et un ensemble de règles d'octroi de licence de service (770) pour déterminer qu'il convient de fonctionner ou non dans un mode opérationnel d'octroi de licence d'après un accord de licence de service ;
surveiller une performance du réseau durant un fonctionnement dans un mode opérationnel d'octroi de licence en ligne normal ;
déterminer, en réponse à une interruption de la performance de réseau, qu'il convient de fonctionner dans le mode opérationnel d'octroi de licences à tolérance de pannes ou le mode opérationnel d'octroi de licence d'après un accord de licence de service en fonction de la performance du réseau, de l'ensemble de règles de tolérance de pannes et de l'ensemble de règles d'octroi de licence de service ;
fonctionner dans le mode déterminé ;
surveiller la performance du réseau pour déterminer qu'il convient ou non de continuer le fonctionnement dans le mode déterminé ; et
reprendre, en réponse à la détermination que le fonctionnement dans le mode déterminé n'est plus nécessaire, le fonctionnement dans le mode opérationnel en ligne normal.

2. Appareil selon la revendication 1, dans lequel le contrôleur de gestion de licences de logiciel comprend en outre :
un module d'octroi de licences (720) ;
un module de liaison de test de communications (730) configuré pour tester une liaison de communication entre un consommateur de licence et un fournisseur de licence ; et
un module logiciel de couche logique exécutive (740).

3. Appareil selon la revendication 2, dans lequel le module d'octroi de licences est configuré pour octroyer temporairement une licence d'exploitation d'une application logicielle (120) au consommateur de licence qui se déconnecte ensuite du fournisseur de licence.

4. Appareil selon la revendication 2, dans lequel le module logiciel de couche logique exécutive comprend :
l'ensemble de règles de tolérance de pannes ;
l'ensemble de règles d'octroi de licence de service ; et
un historique d'interruption de réseau.

5. Appareil selon la revendication 4, dans lequel le module logiciel de couche logique exécutive est configuré pour employer le module de liaison de test de communications afin de surveiller la performance du réseau.

6. Procédé de gestion de licences de logiciel pour une pluralité de noeuds informatiques comprenant des ordinateurs (100, 200, 300) dans un réseau informatique poste à poste, le procédé comprenant :
l'exploitation, par une unité de traitement (100, 200, 300), d'un contrôleur de gestion de licences de logiciel ;
la mémorisation d'un ensemble de règles de tolérance de pannes (760) pour déterminer qu'il convient de fonctionner ou non dans un mode opérationnel d'octroi de licences à tolérance de pannes et d'un ensemble de règles d'octroi de licence de service (770) pour déterminer qu'il convient de fonctionner ou non dans un mode opérationnel d'octroi de licence d'après un accord de licence de service ;
la surveillance d'une performance du réseau tout en exploitant le contrôleur de gestion de licences de logiciel dans un mode opérationnel d'octroi de licence en ligne normal ;
la détermination, en réponse à une interruption de la performance de réseau, qu'il convient de fonctionner dans le mode opérationnel d'octroi de licence à tolérance de pannes ou dans le mode opérationnel d'octroi de licence d'après un accord de licence de service en fonction de la performance du réseau, de l'ensemble de règles de tolérance de pannes et de l'ensemble de règles d'octroi de licence de service ;
l'exploitation du contrôleur de gestion de licences de logiciel dans le mode déterminé ;
la surveillance de la performance du réseau pour déterminer qu'il convient ou non de continuer le fonctionnement dans le mode déterminé ; et
la reprise, en réponse à une détermination que le fonctionnement dans le mode déterminé n'est plus nécessaire, de l'exploitation dans le mode opérationnel en ligne normal.

7. Procédé la revendication 6, dans lequel le contrôleur de gestion de licences de logiciel comprend :
un module d'octroi de licences (720) ;
un module de liaison de test de communications (730) configuré pour tester une liaison de communication entre un consommateur de licence et un fournisseur de licence ; et
un module logiciel de couche logique exécutive (740) .

8. Procédé selon la revendication 7, comprenant en outre:
l'utilisation (520-580, 620-695) du module d'octroi de licences pour céder temporairement une licence d'exploitation d'une application logicielle (120) au consommateur de licence qui se déconnecte ensuite du fournisseur de licence.

9. Procédé selon la revendication 7, dans lequel le module logiciel de couche logique exécutive comprend :
l'ensemble de règles de tolérance de pannes ;
l'ensemble de règles d'octroi de licence de service ; et
un historique d'interruptions de réseau.

10. Procédé selon la revendication 7, dans lequel la détermination qu'il convient de fonctionner dans le mode de tolérance de pannes ou dans le mode d'octroi de licence de service comprend :
la réception de données de l'ensemble de règles de tolérance de pannes et de données de l'historique d'interruptions de réseau ; et
la sélection du mode opérationnel d'octroi de licences à tolérance de pannes en réponse aux données reçues de l'ensemble de règles de tolérance de pannes et de l'historique d'interruptions de réseau.
